(19) Europäisches Patentamt
European Patent Office
Office européen des brevets

(11) **EP 2 932 276 B1**

(12) **EUROPÄISCHE PATENTSCHRIFT**

(45) Veröffentlichungstag und Bekanntmachung des Hinweises auf die Patenterteilung:
**13.03.2019 Patentblatt 2019/11**

(51) Int Cl.:
***G01P 21/00*** (2006.01)    ***B60T 8/172*** (2006.01)
***G01C 25/00*** (2006.01)

(21) Anmeldenummer: **13802913.7**

(22) Anmeldetag: **28.11.2013**

(86) Internationale Anmeldenummer:
**PCT/EP2013/074937**

(87) Internationale Veröffentlichungsnummer:
**WO 2014/090579 (19.06.2014 Gazette 2014/25)**

(54) **VERFAHREN UND STEUERGERÄT ZUR ERMITTLUNG DES OFFSETWERTES EINES SENSORSIGNALS**

METHOD AND CONTROL DEVICE FOR DETERMINING THE OFFSET VALUE OF A SENSOR SIGNAL

PROCÉDÉ ET DISPOSITIF DE COMMANDE DE DÉTERMINATION DE LA VALEUR DE DÉCALAGE D'UN SIGNAL DE CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2012 DE 102012222893**

(43) Veröffentlichungstag der Anmeldung:
**21.10.2015 Patentblatt 2015/43**

(73) Patentinhaber: **Robert Bosch GmbH**
**70442 Stuttgart (DE)**

(72) Erfinder:
• **WAGNER, Marcus**
**74348 Lauffen (DE)**
• **BURKERT, Jochen**
**70806 Kornwestheim (DE)**

(56) Entgegenhaltungen:
**EP-A1- 0 488 594      WO-A1-01/50090**
**DE-A1- 10 314 998      DE-A1-102010 000 867**

EP 2 932 276 B1

**Beschreibung**

Stand der Technik

Aus der DE 102 54 296 A1 sind ein Verfahren und eine Vorrichtung zur Ermittlung des Offsetwertes eines Längsbeschleunigungssensors bekannt. Dabei wird im Fahrzeugstillstand bei betätigter Bremse aus dem Ausgangssignal des Längsbeschleunigungsensors eine erste die Fahrbahnneigung repräsentierende Neigungsgröße ermittelt. Nach einem auf den Fahrzeugstillstand folgenden Lösen der Bremse wird aus dem Ausgangssignal des Sensors eine zweite die Fahrbahnneigung repräsentierende Neigungsgröße ermittelt. Abhängig von beiden Neigungsgrößen wird der Offset des Längsbeschleunigungssensors ermittelt.

Aus der WO 01/50090 A1 ist ein ähnliches Verfahren bekannt.

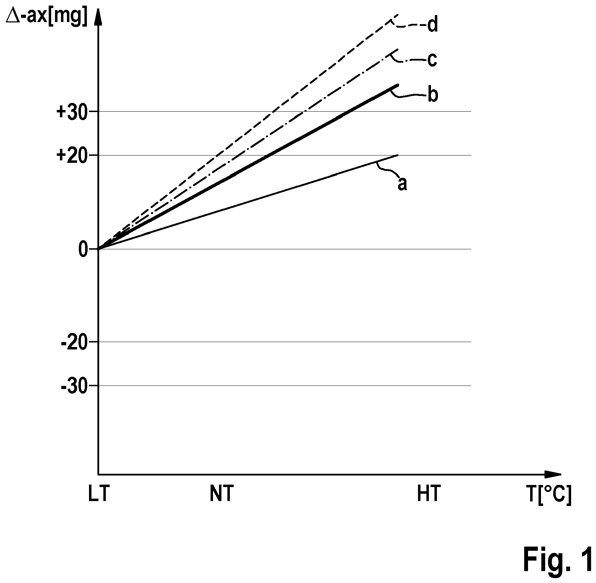

Häufig werden für längsdynamisch wirkende Stillstandsfunktionen einer Fahrdynamikregelung wie z.B. einer Hill-Hold-Control-Funktion sehr hohe Anforderungen an die Temperaturabhängigkeit des Offsetwertes des für die Fahrbahnlängsneigungsermittlung verwendeten Längsbeschleunigungssensors gestellt. Das heißt, das Ausgangssignal des Sensors darf nur eine sehr schwache Temperaturabhängigkeit besitzen. In Fig. 1 ist beispielhaft der Offsetwert eines Längsbeschleunigungssensors als Funktion der Temperatur aufgetragen. In Abszissenrichtung wächst die Temperatur des Sensors von links nach rechts an.

"LT" bedeutet niedrige Temperatur im Bereich von -40 °C, "NT" bedeutet Normaltemperatur im Bereich von 20°C und "HT" bedeutet eine hohe Temperatur im Bereich von 85° C. In Ordinatenrichtung ist beispielhaft der Offsetwert aufgetragen. Dabei kennzeichnen a, b, c und d vier unterschiedliche Sensoren.

Mit zunehmender Temperatur vergrößert sich im Beispiel von Fig. 1 jeweils der Offsetwert.

Wird ein Fahrzeug lange bei hoher Temperatur gefahren, dann wird im Beispiel nach Fig. 1 der Offsetwert des Längsbeschleunigungssensors zunehmen. Dieser Wert wird von den Langzeit-Offsetkompensationsalgorithmen gelernt und bei Zündung-aus im Steuergerät gespeichert. Bei Zündung-ein wird dann der gespeicherte Wert wieder verwendet. Dabei hat sich aber in der Zeit, in der das Fahrzeug abgestellt und ausgeschaltet war, sicher die Temperatur geändert und somit der vorherrschende Offset. Da dieser geänderte Offset für das Fahrzeug bzw. System bei Zündung-ein sprunghaft auftritt, wird von einem Kurzzeit-Offset gesprochen, welcher nicht sofort abgleichbar ist. Diesem Problem wird begegnet, indem man sehr strenge Kurzzeitoffsets, d.h. Temperaturcharakteristiken, als Anforderungen an die Sensoren stellt. Im Beispiel nach Fig. 1 könnte dies bedeuten, dass lediglich Sensor a in Frage kommt, die Sensoren b, c und d wegen zu starker Temperaturabhängigkeit des Offsetwertes jedoch verworfen werden.

Offenbarung der Erfindung

Die Erfindung betrifft ein Verfahren zur Ermittlung des Offsetwertes eines Sensorsignals in einem Fahrzeug nach Beendigung eines Abstellzeitraums wie im unabhängigen Anspruch 1 beansprucht. Ein zugehöriges Steuergerät ist im unabhängigen Anspruch 8 beansprucht.

Durch die Erfindung wird es vermieden, dass durch die Änderung der Umgebungstemperatur des Sensors und damit der Sensortemperatur während des Abstellvorgangs ein stark fehlerhafter Offsetwert für den Sensor ermittelt und verwendet wird. Ist der Sensor nahe am Motor verbaut, dann ist die Motortemperatur bzw. Motorraumtemperatur die maßgebende Größe für die Sensortemperatur. Diese sinkt während eines Parkvorgangs ab. Ist der Sensor unter der Hutablage verbaut, dann kann dessen Temperatur rasch anwachsen, wenn das Fahrzeug in der Sonne geparkt ist und sich die Hutablage durch Sonneneinstrahlung erwärmt. Ist der Sensor nahe dem Unterboden des Fahrzeugs verbaut, dann kann der Sensor sehr schnell abkühlen, wenn der Wagen im Schnee geparkt wird. Im allgemeinen wird der Sensor während der Fahrt die Temperatur am Einbauort des Sensors annehmen.

Ein Beispiel, welches nicht unter die vorliegende Erfindung fällt, zeigt, dass der geänderte Offsetwert des Sensorsignals nach Beendigung des Abstellzeitraums aus der Differenz zwischen dem nach Beendigung des Abstellzeitraums vorliegenden Sensorsignal und dem offsetkorrigierten Sensorsignal vor Beginn des Abstellzeitraums ermittelt wird. Dies eignet sich damit insbesondere für Sensoren, welche eine Größe erfassen, welche sich während des Abstellvorgangs nicht geändert hat, deren Offsetwert sich aber während des Abstellvorgangs ändern kann.

Ein weiteres Beispiel zeigt, dass der nach Beendigung des Abstellzeitraums ermittelte geänderte Offsetwert anschließend während eines Zeitintervalls vorgegebener Länge gemäß einer vorgegebenen zeitlichen Funktion zeitlich so modifiziert wird, dass der geänderte Offsetwert am Ende des Zeitintervalls den vor Beginn des Abstellzeitraums ermittelten Offsetwert annimmt. Hier wird die Eigenschaft des Offsetwerts ausgenutzt, dass dieser sich nur sehr langfristig ändert.

Eine vorteilhafte Ausgestaltung der Erfindung ist dadurch gekennzeichnet, dass es sich bei dem Abstellzeitraum um einen Zeitraum handelt, in welchem das Fahrzeug eine ausgeschaltete Zündung aufweist.

Eine vorteilhafte Ausgestaltung der Erfindung ist dadurch gekennzeichnet, dass es sich bei dem Sensor um einen Längsbeschleunigungssensor handelt.

Eine vorteilhafte Ausgestaltung der Erfindung ist dadurch gekennzeichnet, dass der Offsetwert außerhalb des Zeitintervalls vorgegebener Länge nach Beendigung des Abstellvorgangs mittels einer Tiefpassfilterung des Sensorsignals ermittelt wird und während des Zeitintervalls vorgegebener Länge durch den ermittelten geänderten Offsetwert ersetzt wird.

Weiter umfasst die Erfindung eine Vorrichtung, enthaltend Mittel, die zur Durchführung der erfindungsgemäßen Verfahren ausgestaltet sind. Dies ist ein Steuergerät, welches mit dem Programmcode der erfindungsgemäßen Verfahren ausgestattet ist.

Die Zeichnung besteht aus den Figuren 1 bis 4.

Fig. 1 zeigt verschiedene Offsetcharakteristiken von Längsbeschleunigungssensoren als Funktion der Temperatur.

Fig. 2 zeigt anhand der zeitlichen Verläufe ausgewählter Größen ein Beispiel.

Fig. 3 zeigt anhand der zeitlichen Verläufe ausgewählter Größen die Ausgestaltung der Erfindung.

Fig. 4 zeigt in Form eines Blockdiagramms die Struktur der Ausgestaltung der Erfindung.

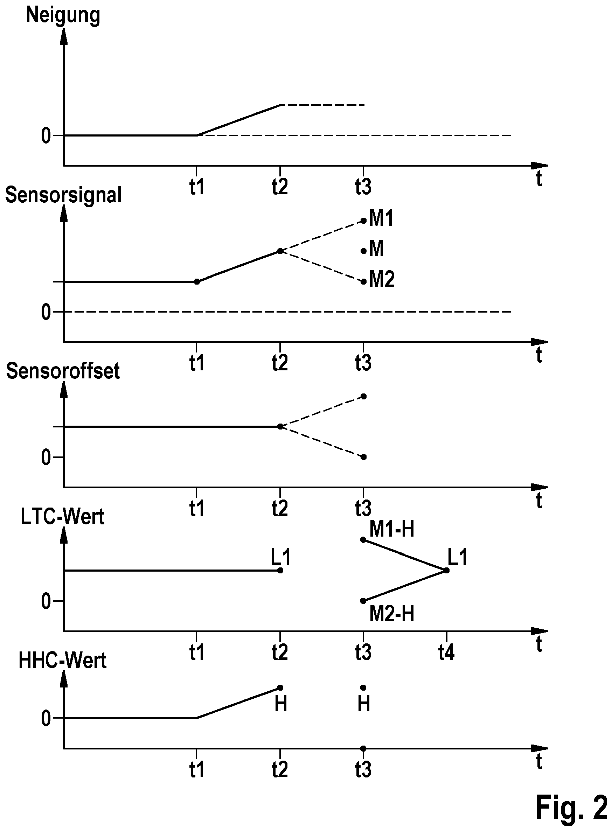

Fig. 2 zeigt sechs Signalverläufe als Funktion der jeweils in Abszissenrichtung aufgetragenen Zeit t. Im obersten Diagramm ist die aktuelle Fahrbahnneigung als Funktion der Zeit t während einer Fahrt aufgetragen. Das Fahrzeug bewegt sich bis zum Zeitpunkt t1 auf einer ebenen Fahrbahn, danach nimmt die Fahrbahnneigung bis zur Zeit t2 kontinuierlich zu. Zum Zeitpunkt t2 wird das Fahrzeug auf der geneigten Fahrbahn abgestellt und zum späteren Zeitpunkt t3 wieder in Betrieb genommen.

Im zweiten Diagramm von oben ist in Ordinatenrichtung das Ausgangssignal eines Längsbeschleunigungssensors bzw. ax-Sensors dargestellt. Dieses Signal ist bereits bzgl. der Fahrzeuglängsbeschleunigung korrigiert und gibt daher die Fahrbahnneigung an. Bezüglich des Offsetwertes ist das Signal jedoch noch nicht korrigiert. Das Signal weist bis zum Zeitpunkt t1 einen konstanten Wert auf, welcher aber von Null verschieden ist. Dieser konstante Wert, welcher wegen der ebenen Fahrbahn eigentlich Null sein sollte, stellt den Offsetwert des verwendeten ax-Sensors dar. Zwischen t1 und t2 wächst das Ausgangsignal wie erwartet linear an, entsprechend dem Steigungsverlauf im oberen Diagramm. Während des Parkzeitraums zwischen t2 und t3 kann sich die Temperatur des Sensors gravierend ändern, während bis zum Zeitpunkt t2 der Sensor im wesentlichen die Motorraumtemperatur aufwies

Nach Beendigung des Abstellvorgangs nimmt das Sensorsignal deshalb einen Wert M zwischen M1 und M2 an. Bei M1 und M2 handelt es sich um zwei extreme Temperaturszenarien, denn während des Parkvorgangs ändern sich die Sensortemperatur und damit der Offsetwert. M wird im allgemeinen irgendeinen Wert zwischen M1 und M2 annehmen.

Im dritten Diagramm von oben ist in Ordinatenrichtung der Offsetwert des Sensors eingezeichnet. Man erkennt, dass der Offsetwert sich zwischen t1 und t2 nicht geändert hat. Das ist dadurch begründet, da der Sensor in diesem Zeitraum eine nahezu konstante Temperatur, z.B. die Motorraumtemperatur, aufwies. Ab t = t2 ändert sich der Offsetwert je nach Temperaturszenario.

Im vierten Diagramm von oben ist in Ordinatenrichtung der LTC-Wert aufgetragen. Unter dem LTC-Wert versteht man den mittels eines Langzeitabgleichs ermittelten Offsetwert des Sensors. Wenn sich der Offsetwert des Sensors nur langsam ändert, dann gibt der LTC-Wert sehr gut den Offsetwert an. Ändert sich der Offsetwert dagegen sprungartig, dann gleicht sich der LTC-Wert langsam an, bis er den Offsetwert gelernt hat. Der LTC-Algorithmus stellt im wesentlichen einen PT1-Filter für das Sensorsignal dar. Am Ende des Parkvorgangs bei t = t3 liegt eine solche sprungartige Änderung des Offsetwertes vor, da während des Parkvorgangs keine Ermittlung des Offsetwerts stattfindet und die LTC-Filterung gestoppt war. Ab t = t3 wird der PT1-Filter zur Ermittlung des LTC-Wertes sprungartig mit einem Sensorsignal beschickt, welches einen anderen Offsetwert gegenüber dem Zeitpunkt t2 aufweist.

Im fünften Diagramm von oben ist der HHC-Wert aufgetragen. Darunter versteht man den offsetkorrigierten Sensorwert, d.h. die mittels des Sensors ermittelte Steigung. Diese wächst ab dem Zeitpunkt t1 linear an und erreicht zum Haltezeitpunkt t2 den Wert H. H gibt die mittels des Sensors ermittelte Steigung zum Zeitpunkt t2 an.

Bei der Erfindung wird angenommen, dass sich die Fahrbahnneigung während des Parkvorgangs nicht verändert hat, weil das Fahrzeug nicht bewegt wurde. Diese Annahme ist fast immer richtig, seltene Ausnahmen können ein Abschleppen des Fahrzeugs oder ein Wegrollen mit ausgeschalteter Zündung sein.

Wegen dieser Annahme muss die Neigung zum Zeitpunkt t3 identisch mit der Neigung zum Zeitpunkt t2 sein. Der offsetkorrigierte Sensorwert zum Zeitpunkt t2 war H. Der offsetkorrigierte Sensorwert zum Zeitpunkt t3 muss deshalb ebenfalls H sein. Der Sensorwert zum Zeitpunkt t3 nimmt jedoch toleranzbedingt und temperaturbedingt einen Wert M zwischen M1 und M2 an. Der Offsetwert zum Zeitpunkt t3 ist deshalb die Differenz zwischen Sensorwert und H, d.h. z. B. M - H.

Der Unterschied zwischen dem Sensorwert zum Zeitpunkt t3, z.B. M1, und dem HHC-Wert H zum Zeitpunkt t2 wird bei der LTC-Filterung als Anfangswert für Stillstände nach dem Einschalten der Zündung in den ersten Minuten genutzt.

Daraufhin wird der Anfangswert der LTC-Filterung innerhalb einer vorgegebenen Zeit vom erwähnten Startwert, welcher in den beiden Extremszenarien den Wert M1 - H bzw. den Wert M2 - H annimmt, auf den alten Stopwert L1 zurückgefahren. Dieses Zurückfahren erfolgt dabei anhand eines vorgegebenen Funktionsverlaufs innerhalb eines vorgegebenen sich von t = t3 bis t = t4 erstreckenden Zeitintervalls. Beispielsweise kann es sich dabei um eine lineare Funktion handeln, wie im vierten Diagramm von oben beim LTC-Wert dargestellt. Das langsame Zurückfahren auf den alten Stoppwert L1 ist deshalb sinnvoll, weil nach einem Zeitraum von typischerweise einigen Minuten der Sensor zumeist wieder die Temperatur die vor Beginn des Parkvorgangs aufweist, z.B. wieder die Motorraumtemperatur erreicht hat und hier im wesentlichen wieder den alten Offsetwert L1 aufweist.

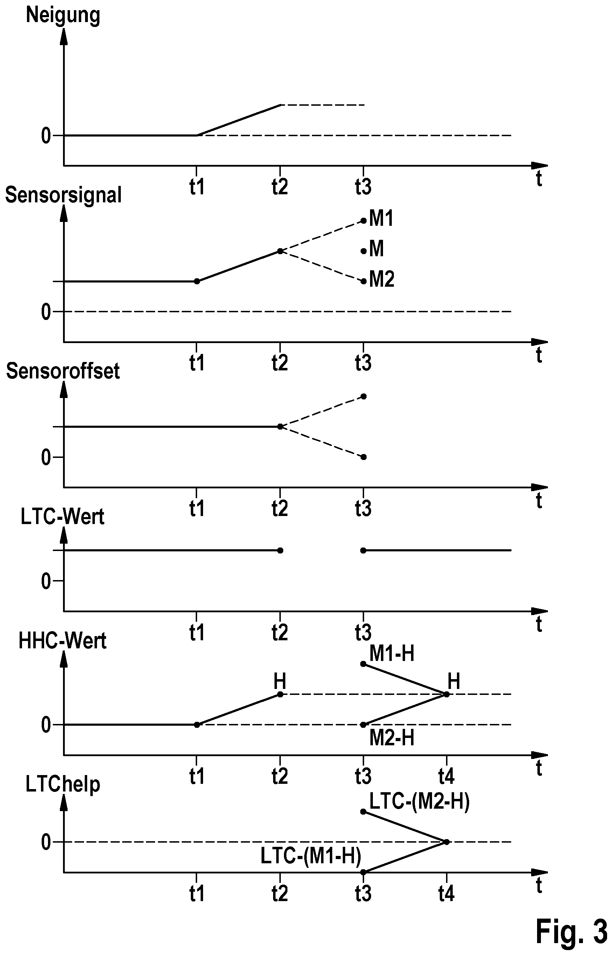

Die Ausführungsform der Erfindung ist in Fig. 3 dargestellt. Die betrachtete Situation ist dieselbe wie in Figur 2. Ein Fahrzeug fährt bis zum Zeitpunkt t1 auf ebener Fahrbahn und bewegt sich dann entlang linear zunehmender Fahrbahnneigung bis zum Zeitpunkt t2. Dann wird die Zündung ausgeschaltet und das Fahrzeug abgestellt. Zum späteren Zeitpunkt t3 erfolgt ein Wideranlassen der Zündung. Während des Parkzeitraums zwischen t = t2 bis t = t3 haben sich der Motor des Fahrzeugs und damit die Sensortemperatur abgekühlt, wenn ein im Motorraum verbauter Sensor angenommen wird. Die ersten drei Diagramme von oben zeigen analog zu Fig. 2 die zeitlichen Verläufe von Fahrbahnneigung, des Ausgangssignals des Längsbeschleunigungssensors sowie den Offsetwert des Sensors. Im vierten Diagramm von oben ist der LTC-Wert dargestellt. Dieser wird in dieser Ausführungsform völlig unabhängig vom Abstellvorgang des Fahrzeugs weiterberechnet und bleibt näherungsweise konstant. Dies ist dadurch bedingt, dass es sich bei der durch die Temperaturänderung während des Abstellvorgangs erfolgten zeitweiligen Offsetänderung nach Fahrzeugstart um ein sehr kurzzeitiges und damit hochfrequentes Ereignis handelt (Zeitdauer wenige Minuten bis zum Wiedererreichen der Motortemperatur des Sensors), welches wegen der Tiefpassfilterung keinen nennenswerten Einfluss auf den LTC-Wert hat.

Würde dieser mittels einer Tiefpassfilterung gewonnene LTC-Wert beim Wiederanfahren zum Zeitpunkt t3 weiterhin als Offsetwert verwendet, dann würde sich daraus ein falscher HHC-Wert ergeben. Weil die Temperatur während des Parkvorgangs gefallen ist, stellt dieser LTC-Wert nicht mehr den momentan vorhandenen Offsetwert dar. Deshalb wird in der Ausführungsform eine Hilfsvariable LTChelp eingeführt, welche im untersten Diagramm von Fig. 3 eingezeichnet ist. Diese wird nur im Zeitintervall von t3 bis t4 verwendet und ist außerhalb davon Null.

Diese Hilfsvariable wird dem mittels des LTC-Wertes offsetkorrigierten Sensorwert im betrachteten Zeitintervall hinzuaddiert.

Der Wert von LTChelp zum Zeitpunkt t3 errechnet sich nach der Beziehung

$$LTChelp = LTC - (M\text{-}H).$$

Damit ergibt sich zum Zeitpunkt t3 ein HHC-Wert gemäß der Beziehung

$$HHC\text{-}Wert = (Sensorwert - LTC) + Hilfsvariable$$
$$= (M - LTC) + (LTC\text{-} (M\text{-}H)) = H$$

Das heißt der HHC-Wert hat sich nach Beendigung des Parkvorgangs nicht geändert. Das ist auch anschaulich verständlich, da sich die Fahrbahnneigung nicht verändert hat. Die Hilfsvariable wurde so definiert, dass sich beim Anfahrvorgang derselbe HHC-Wert ergibt, obwohl sich die Sensortemperatur und damit dessen Offsetwert geändert haben.

Im allgemeinen kann davon ausgegangen werden, dass zum Zeitpunkt t4 der Sensor wieder auf die Motortemperatur bzw. Motorraumtemperatur aufgewärmt ist und somit wieder den zum Zeitpunkt t2 vorliegenden Offsetwert aufweist.

Deshalb wird die Hilfsvariable LTChelp gemäß einer vorgebbaren Rampenfunktion von ihrem Maximalwert LTC- (M-H) auf Null zurückgeführt. Bei dieser Rampenfunktion handelt es sich im einfachsten Fall um eine lineare Funktion, wie sie auch in Fig. 3 verwendet wurde. Selbstverständlich kann anstelle der linearen Funktion auch eine andere Funktion, z.B. eine Parabelfunktion oder eine Exponentialfunktion, verwendet werden. Der mittels des beschriebenen Verfahrens ermittelte HHC-Wert ist im fünften Diagramm von oben dargestellt.

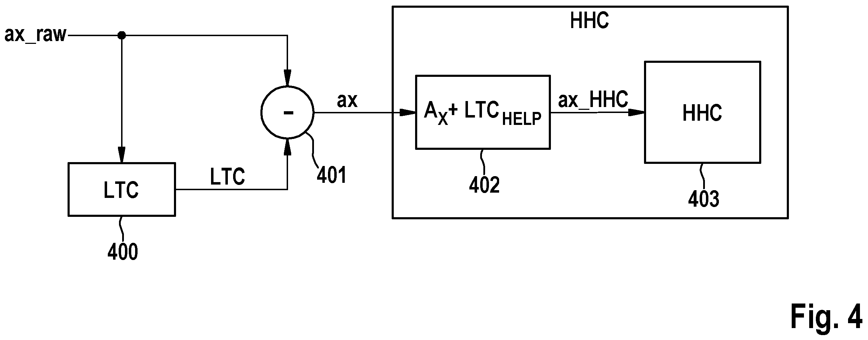

Die Struktur der beschriebenen Ausführungsform des Verfahrens ist in Fig. 4 dargestellt. Das Eingangssignal ist das mit ax_raw bezeichnete Sensorsignal, dieses stellt das ungefilterte und offsetbehaftete Ausgangssignal eines Längsbeschleunigungssensors dar. Ein Herausrechnen der Längsbeschleunigung habe jedoch bereits stattgefunden. Im Stillstand ist die Längsbeschleunigung gleich Null. Dieses Signal ax_raw wird den Blöcken 400 und 401 zugeführt.

In Block 401 erfolgt die Ermittlung des LTC-Wertes dieses Signals über eine Tiefpassfilterung, dieser LTC-Wert stellt den Langzeitoffsetwert von ax_raw dar. Im Subtraktionsblock 401 wird der LTC-Wert von dem Sensorsignal ax_raw subtrahiert, d.h. das Sensorsignal wird um den Langzeitoffsetwert bereinigt. Dabei ist zu beachten, dass plötzliche Änderungen des Offsetwertes das Ausgangssignal ax verfälschen. Eine solche plötzliche Änderung des Offsetwertes tritt während eines Parkvorgangs mit ausgeschalteter Zündung ein. Im allgemeinen ändern sich während des Parkvorgangs die Motortemperatur und damit auch die Sensortemperatur, d.h. der Offsetwert des Sensors vor dem Ausschalten der Zündung und der Offsetwert nach dem Einschalten des Sensors sind verschieden. Während des Parkvorgangs findet keine Auswertung der Sensorsignale und damit auch keine Ermittlung des Offsetwertes statt. Das bedeutet, dass nach dem Einschalten der Zündung eine sprungartige Änderung des Sensorsignals vorliegt, bedingt durch die sprungartige Änderung des Offsetwertes. Deshalb wird eine Hilfsvariable LTChelp definiert, welche in Block 402 nach dem Einschalten der Zündung während eines Zeitintervalls vorgegebener Länge zu dem Wert ax addiert werden. Diese Variable LTChelp kompensiert den Offsetfehler unmittelbar nach dem Einschalten der Zündung exakt, danach noch näherungsweise. Die Länge des Zeitintervalls wird dabei so gewählt, dass nach Ablauf des Zeitintervalls davon ausgegangen werden kann, dass der Sensor wieder die Motortemperatur erreicht hat. Das nun auch mittels der Hilfsvariablen korrigierte Signal ax_HHC steht nun im Block 403 Funktionen wie beispielsweise einer Hillholder-Funktion HHC zur Verfügung.

In den Ausführungsbeispielen wurde das Ausgangssignal eines Längsbeschleunigungssensor betrachtet. Die Erfindung eignet sich ebenso zur Ermittlung der Offsetwerte anderer Sensoren nach einem Abstellvorgang, beispielsweise eines Gierratensensors oder eines Querbeschleunigungssensors.

**Patentansprüche**

1. Verfahren zur Ermittlung eines offsetkorrigierten Sensorsignals in einem Fahrzeug nach Beendigung eines Abstellzeitraums, in welchem das Fahrzeug abgestellt war, enthaltend die Schritte

   - Ermittlung des offsetkorrigierten Sensorsignals (H) vor Beginn des Abstellzeitraums (t2),
   - Abspeichern des vor Beginn des Abstellzeitraums offsetkorrigierten Sensorsignals (H) in einem Datenspeicher,
   - Ermittlung des offsetkorrigierten Sensorsignals aus dem vor Beginn des Abstellzeitraums ermittelten offsetkorrigierten Sensorsignal (H) und dem nach Beendigung des Abstellzeitraums vorliegenden Sensorsignal (M),

   wobei

   - die Ermittlung des offsetkorrigierten Sensorsignals nach Beendigung des Abstellzeitraums (t3) stattfindet und
   - das offsetkorrigierte Sensorsignal nach der Beendigung des Abstellzeitraums mittels einer Hilfsvariable (LTChelp) ermittelt wird, welche sich gemäß der Beziehung LTChelp = LTC - (M-H) ergibt, wobei LTC den mittels einer Langzeitfilterung erhaltenen Offsetwert des Sensorsignals angibt, M das Sensorsignal angibt und H das offsetkorrigierte Sensorsignal vor Beginn des Abstellzeitraums angibt und
   - wobei das nach Beendigung des Abstellzeitraums offsetkorrigierte Sensorsignal durch Addition der Hilfsvariablen (LTChelp) zu einem Signal, welches sich aus der Differenz zwischen dem Sensorsignal (M) und dem mittels einer Tiefpassfilterung ermittelten Sensorsignal (LTC) ergibt, ermittelt wird.

2. Verfahren nach Anspruch 1, **dadurch gekennzeichnet, dass** die Hilfsvariable anschließend gemäß einer vorgegebenen zeitlichen Funktion zeitlich so modifiziert wird, dass sie nach Ende eines Zeitintervalls vorgegebener Länge (t4-t3) den Wert Null annimmt.

3. Verfahren nach Anspruch 1, **dadurch gekennzeichnet, dass** es sich bei dem Abstellzeitraum um einen Zeitraum handelt, in welchem das Fahrzeug eine ausgeschaltete Zündung aufweist.

4. Verfahren nach Anspruch 1, **dadurch gekennzeichnet, dass** es sich bei dem Abstellzeitraum um einen Zeitraum handelt, in welchem das Fahrzeug zusätzlich nicht bewegt wird und keine Offsetkompensation des Sensorsignals (M) stattfindet.

5. Verfahren nach Anspruch 1, **dadurch gekennzeichnet, dass** die Beendigung des Abstellzeitraums durch das Anlassen der Zündung gekennzeichnet ist.

6. Verfahren nach Anspruch 1, **dadurch gekennzeichnet, dass** es sich bei dem Sensor um einen Längsbeschleunigungssensor, einen Gierratensensor oder einen Querbeschleunigungssensor handelt handelt.

**7.** Verfahren nach Anspruch 2, **dadurch gekennzeichnet, dass** das offsetkorrigierte Sensorsignals außerhalb des Zeitintervalls vorgegebener Länge nach Beendigung des Abstellvorgangs mittels eines Offsetwertes ermittelt wird, welcher mittels einer Tiefpassfilterung des Sensorsignals ermittelt wird.

**8.** Steuergerät, welches mit Programmcode zur Durchführung eines Verfahrens nach einem der Ansprüche 1 bis 7 ausgestattet ist.

**Claims**

**1.** Method for ascertaining an offset-corrected sensor signal in a vehicle after conclusion of a parked period in which the vehicle was switched off, containing the steps of

- ascertaining the offset-corrected sensor signal (H) before the beginning of the parked period (t2),
- storing the sensor signal (H) offset-corrected before the beginning of the switched-period in a data memory,
- ascertaining the offset-corrected sensor signal from the offset-corrected sensor signal (H) ascertained before the beginning of the parked period and the sensor signal (M) present after conclusion of the parked period, wherein
- the ascertainment of the offset-corrected sensor signal takes place after conclusion of the parked period (t3), and
- the offset-corrected sensor signal is ascertained after the conclusion of the parked period by means of a supporting variable (LTChelp) obtained according to the relationship LTChelp = LTC - (M-H), where LTC specifies the offset value obtained with the sensor signal by means of long-term filtering, M specifies the sensor signal and H specifies the offset-corrected sensor signal before the beginning of the parked period, and
- wherein the sensor signal offset-corrected after conclusion of the parked period is ascertained by adding the supporting variable (LTChelp) to a signal obtained from the difference between the sensor signal (M) and the sensor signal (LTC) ascertained by means of a low-pass filtering.

**2.** Method according to Claim 1, **characterized in that** the supporting variable is subsequently modified over time according to a prescribed time function such that it assumes the value zero after the end of a time interval of prescribed length (t4-t3).

**3.** Method according to Claim 1, **characterized in that** the parked period is a period in which the vehicle has a switched-off ignition.

**4.** Method according to Claim 1, **characterized in that** the parked period is a period in which the vehicle is additionally not moved and no offset compensation for the sensor signal (M) takes place.

**5.** Method according to Claim 1, **characterized in that** the conclusion of the parked period is denoted by the ignition being started.

**6.** Method according to Claim 1, **characterized in that** the sensor is a longitudinal acceleration sensor, a yaw rate sensor or a transverse acceleration sensor.

**7.** Method according to Claim 2, **characterized in that** the offset-corrected sensor signal is ascertained outside the time interval of prescribed length after conclusion of the parking process by means of an offset value that is ascertained by means of a low-pass filtering of the sensor signal.

**8.** Controller equipped with program code for performing a method according to one of Claims 1 to 7.

**Revendications**

**1.** Procédé de détermination d'un signal de capteur à offset corrigé dans un véhicule au bout d'une période de stationnement pendant laquelle le véhicule était en stationnement, le procédé comprenant les étapes suivantes

- déterminer le signal de capteur à offset corrigé (H) avant le début de la période de stationnement (t2),
- mémoriser le signal de capteur à offset corrigé (H) dans une mémoire de données,
- déterminer le signal de capteur à offset corrigé à partir du signal de capteur à offset corrigé (H) déterminé avant le début de la période de stationnement et du signal de capteur (M) présent au bout de la période de stationnement,

- la détermination du signal de capteur à offset corrigé ayant lieu au bout de la période de stationnement (t3) et
- le signal de capteur à offset corrigé étant déterminé au bout de la période de stationnement au moyen d'une variable auxiliaire (LTChelp) résultant de la relation LTChelp = LTC - (M - H), LTC indiquant la valeur d'offset du signal de capteur qui est obtenue par filtrage à long terme, M indiquant le signal de capteur et H indiquant le signal de capteur à offset corrigé avant le début de la période de stationnement et
- le signal de capteur à offset corrigé au bout de la période de stationnement étant déterminé par addition de la variable auxiliaire (LTChelp) à un signal résultant de la différence entre le signal de capteur (M) et le signal de capteur (LTC) déterminé au moyen d'un filtrage passe-bas.

2. Procédé selon la revendication 1, **caractérisé en ce que** la variable auxiliaire est ensuite modifiée temporellement selon une fonction temporelle prédéterminée de manière à prendre la valeur zéro au bout d'un intervalle de temps de longueur prédéterminée (t4-t3).

3. Procédé selon la revendication 1, **caractérisé en ce que** la période de stationnement est une période au cours de laquelle le véhicule a le contact coupé.

4. Procédé selon la revendication 1, **caractérisé en ce que** la période de stationnement est une période au cours de laquelle le véhicule n'est en plus pas déplacé et aucune compensation d'offset du signal de capteur (M) n'est effectuée.

5. Procédé selon la revendication 1, **caractérisé en ce que** la fin de la période de stationnement est **caractérisée par** le début de l'allumage.

6. Procédé selon la revendication 1, **caractérisé en ce que** le capteur est un capteur d'accélération longitudinale, un capteur de vitesse de lacet ou un capteur d'accélération transversale.

7. Procédé selon la revendication 2, **caractérisé en ce que** le signal de capteur à offset corrigé est déterminé en dehors de l'intervalle de temps de longueur prédéterminée après la fin du processus de stationnement au moyen d'une valeur d'offset qui est déterminée au moyen d'un filtrage passe-bas du signal de capteur.

8. Dispositif de commande comprenant un code de programme destiné à mettre en oeuvre un procédé selon l'une des revendications 1 à 7.

**Fig. 1**

Neigung

0

t1    t2    t3    t

Sensorsignal

•M1

•M

•M2

0

t1    t2    t3    t

Sensoroffset

0

t1    t2    t3    t

LTC-Wert

M1-H

L1        L1

0

M2-H

t1    t2    t3    t4    t

HHC-Wert

H    H

0

t1    t2    t3    t

**Fig. 2**

Fig. 3

Fig. 4

**IN DER BESCHREIBUNG AUFGEFÜHRTE DOKUMENTE**

**In der Beschreibung aufgeführte Patentdokumente**

- DE 10254296 A1
- WO 0150090 A1